# EUROPEAN PATENT APPLICATION

(11) **EP 1 376 050 A2**
(43) Date of publication of application: **02.01.2004**
(21) Application number: 03013948.9
(22) Date of filing: 20.06.2003
(51) Int. Cl.: G01B 9/02

(54) **Method of adjusting fixed mirror of double-beam interferometer and interferometric spectrophotometer**

(30) Priority: 21.06.2002 JP 2002181188
(71) Applicant: Shimadzu Corporation, Kyoto-shi, Kyoto 604-8511 (JP)
(72) Inventor: Kotani, Tadashi, Hachioji-shi, Tokyo 192-0045 (JP)
(74) Representative: Zimmermann, Gerd Heinrich

(57) **Abstract**

Motors are driven to sequentially move a fixed mirror from an origin or a current position thereby to measure amplitudes of a laser fringe by a photo detector. When a signal satisfying a reference value is obtained at some position, amplitudes are measured on a circle around the position as a center. Apoint having the largest amplitude among all the measured points on the circle is set as the center of a next circle and so the similar measurement is repeated until the amplitude at the center of a circle becomes maximum among all the measured points on the circle. When the amplitude at the center of the circle becomes maximum among all the measured points on the circle, the motors are driven so that phase differences of a vertical side signal and a horizontal side signal from a reference signal approach a target phase difference.

## Description

The present invention relates to a method of adjusting a fixed mirror for an apparatus using a double-beam interferometer such as a Fourier transform infrared spectrophotometer (hereinafter referred as an FTIR) and an interferometric spectrophotometer.

In order to attain high efficiency in the FTIR, it is desirable to maintain constant an angular relation between a beam splitter and each of a fixed mirror and a movable mirror and to maintain the interference efficiency of a control interferometer at a best state. To this end, in general FTIRs, the control of data sampling and an interferometer is performed with reference to the control interferometer using He-Ne laser etc. During a data sampling period etc., the interference state of the control interferometer is kept optimum by using such a method of dynamic alignment (see U.s. Patent No. 4,053, 231 etc., for example).

However, the aforesaid adjusting method is used to perform the control accurately at a distance of a reference signal of the control interferometer in the wavelength range of He-Ne laser (hereinafter called as a fine adjustment). In other words, the reference signal used for the interference adjustment of the interferometer is produced by using the interference of the He-Ne laser, and a distance corresponding to the reference signal is about a wavelength of the He-Ne laser (632.8nm) and the interference adjustment is performed by controlling an inclination of the fixed mirror within this distance. Although a piezo actuator etc. is used for this adjustment, the range of the controllable distance is quite small-Thus, when the interference state changes due to some reason to such a degree that an interference signal from the control interferometer can not be detected at all, it becomes impossible to control the interferometer.

The present invention intends to overcome at least some of the above problems. The object is solved by the method of adjusting a fixed mirror according to independent claim 1 and the interferometric spectrophotometer according to independent claim 4.

Further advantages, features, aspects and details of the invention are evident from the dependent claims, the description and the accompanying drawings.

The present invention generally relates to optical adjustment. In particular it relates to a method of adjusting a fixed mirror. More specifically, the present invention relates to a method of adjusting a fixed mirror for an apparatus using a double-beam interferometer such as a Fourier transform infrared spectrophotometer and an interferometric spectrophotometer.

Accordingly, an object of the invention is to provide a double-beam interferometer and a method of adjusting a fixed mirror for the double-beam interferometer which can restore the interference state to such a degree being capable of controlling an interferometer (hereinafter called as a rough adjustment).

In order to accomplish the object above, the following means are adopted. According to the present invention, there is provided a method of adjusting a fixed mirror of a double-beam interferometer including a control interferometer, comprising:
detecting a laser interference light beam from the control interferometer ; and
adjusting an angle of the fixed mirror with respect to a laser light beam axis in a range from a state where laser light beams do not interfere at all to a state where an intensity of interference of the laser light beams becomes maximum or the laser light beams become in an arbitrary interference state.

In the adjusting method of the fixed mirror, the adjusting step may include: measuring amplitudes of the laser interference light beam while moving a posture of the fixed mirror until the amplitude becomes larger than a preset reference value; measuring amplitudes of the laser interference light beam while moving the posture of the fixed mirror to points on a circle around a point where the amplitude becomes lager than the reference value as a center; setting a point having the largest amplitude among all the measured points on the circle as the center of the next circle; and repeating the measuring step of the amplitudes at the points on the circle and the setting step until the amplitude at the center of the circle becomes maximum among all the measured points on the circle.

The adjusting step may further include: moving the posture of the fixed mirror so that phase differences of a vertical side signal and a horizontal side signal from a reference signal of the laser interference light beam approach preset target phase differences.

Further, according to the present invention, there is also provided an interferometric spectrophotometer comprising:
a control interferometer having a fixed mirror;
a photo detector for detecting a laser interference light beam from the control interferometer; and
an adjusting mechanism for adjusting an angle of the fixed mirror with respect to a laser light beam axis in a range from a state where laser light beams do not interfere at all to a state where an intensity of interference of the laser light beams becomes maximum or the laser light beams become in an arbitrary interference state.

The invention is also directed to apparatus for carrying out the disclosed methods and including apparatus parts for performing each described method step. These method steps may be performed by way of hardware components assisted by a computer programmed by appropriate software, by any combination of the two or in any other manner. Furthermore, the invention is also directed to methods by which the described apparatus operates. It includes method steps for carrying out every function of the apparatus.

The invention will be better understood by reference to the following description of embodiments of the invention taken in conjunction with the accompanying drawings, wherein
Fig. 1 is a diagram showing the construction of a main portion of an FTIR according to an embodiment of the invention;
Fig. 2A is a front external diagram showing the construction of a fixed mirror posture adjusting mechanism according to the embodiment;
Fig. 2B is a sectional schematic diagram cut-away along a transverse axis C2 in Fig. 2A;
Figs. 3A and B are drawings for explaining the operation of the fixed mirror posture adjusting mechanism according to the embodiment ;
Fig. 4 is a diagram showing a laser detecting element according to the embodiment;
Fig. 5 is a schematic diagram showing signals for laser fringe detected by a laser detector according to the embodiment ;
Fig. 6A is a drawing showing a measurement procedure of an amplitude in the procedure for the rough adjustment of the fixed mirror according to the embodiment; and
Fig. 6B a drawing showing a procedure for searching the maximum amplitude in the procedure for the rough adjustment of the fixed mirror according to the embodiment.

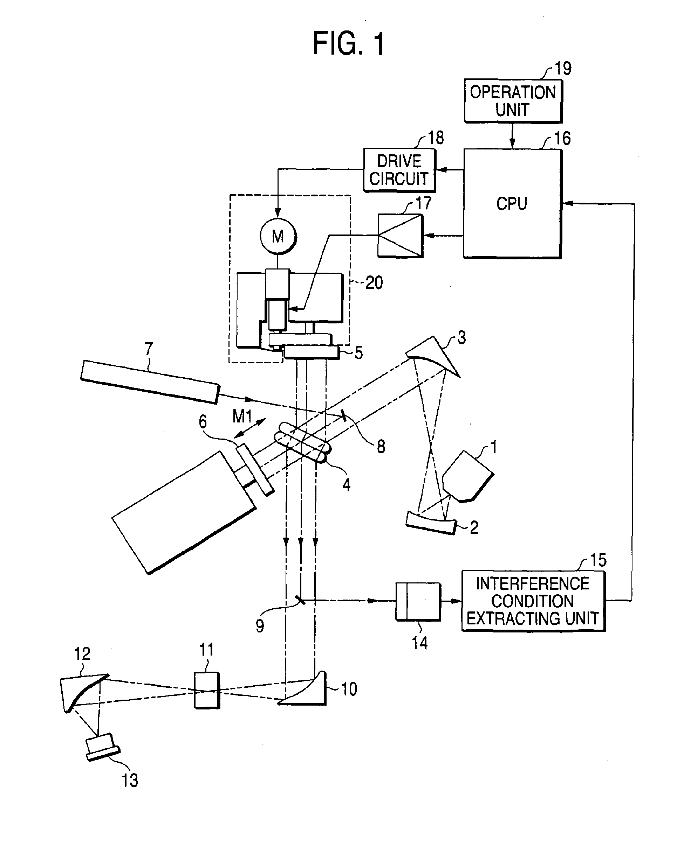

An embodiment of a double-beam interferometer according to the invention will be explained with reference to the accompanying drawings. Fig. 1 shows an example in which the embodiment is applied to an adjustment of a fixed mirror of a Fourier transform infrared spectrophotometer.

A main interferometer includes an infrared source 1, a converging mirror 2, a collimator mirror 3, a beam splitter 4, a fixed mirror 5 and a movable mirror 6 etc. The main interferometer generates an infrared interference light beam for measuring spectrum. The infrared light beam emitted from the infrared source 1 is irradiated on the beam splitter 4 through the converging mirror 2 and the collimator mirror 3. The beam splitter 4 splits the irradiated infrared light beam into two light beams directed to the fixed mirror 5 and the movable mirror 6, respectively. The light beams reflected from the fixed mirror 5 and the movable mirror 6 are returned to and composed at the beam splitter 4 and the composed beam is sent to an optical path directed to a parabolic mirror 10. In this case, since the movable mirror 6 moves reciprocally in the direction shown by an arrow M1 in Fig. 1, a difference of the optical path between the two light beams thus split changes periodically and the light beam directed to the parabolic mirror 10 from the beam splitter 4 becomes as an infrared interference light beam which amplitude changes over time. The light beam converged at the parabolic mirror 10 is irradiated on a sample 11. The light beam transmitted through (or reflected from) the sample 11 is converged at a photo detector 13 by an elliptical mirror 12.

A control interferometer includes a laser source 7, a first reflecting mirror 8, a second reflecting mirror 9, the beam splitter 4, the fixed mirror 5 and the movable mirror 6. The control interferometer generates a laser interference light beam for obtaining a signal for the laser interference light beam (fringe). The light beam emitted from the laser source 7 is irradiated on the beam splitter 4 through the first reflecting mirror 8 and sent toward the parabolic mirror 10 as an interference light beam like the light beam from the infrared source 1. The laser interference light beam traveling as a light beam with a minute diameter is reflected by the second reflecting mirror 9 inserted in the optical path of the infrared interference light beam and is introduced into a photo detector 14 . Actually, although there is provided with a means for further splitting the laser interference light beam and detecting the split light beams, the configuration thereof is omitted in Fig. 1.

The photo detector 14 is a photo detector divided into four pieces in the circumferential direction at a position of receiving the interference light beam. An interference condition extracting unit 15 generates a signal corresponding to a deviation of the position where the interference light beam is projected, based on four output signals from the photo detector 14. A CPU 16 contains predetermined program therein and performs predetermined calculation as to a signal from the interference condition extracting unit 15 thereby to output a signal necessary for adjusting the angle of the fixed mirror 5 to an amplifier 17 and a drive circuit 18. An operation unit 19 for receiving an instruction for rough adjustment from a measuring person is coupled to the CPU 16.

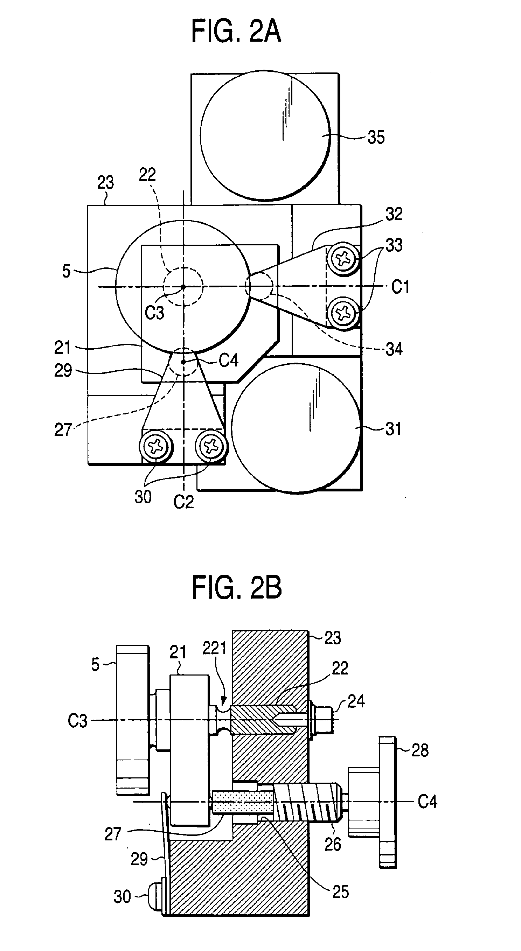

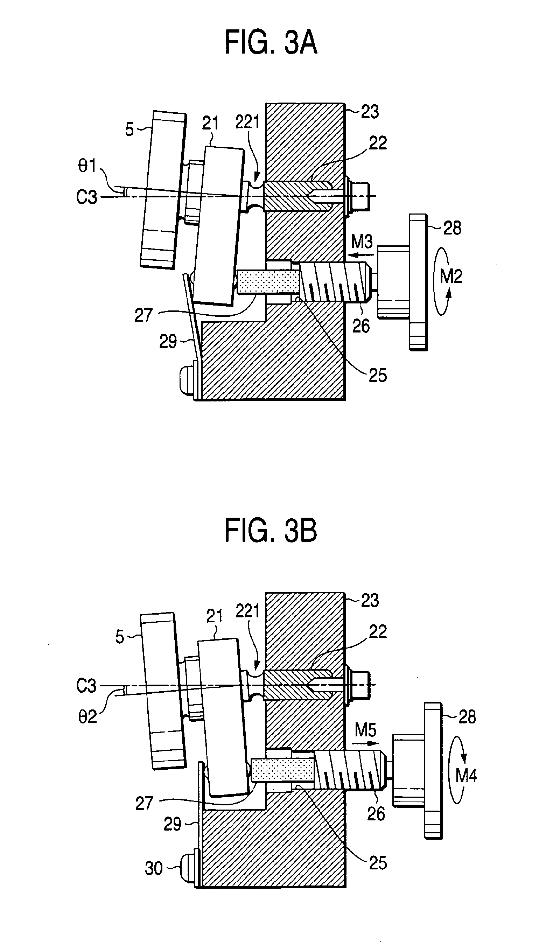

This interferometer is arranged in a manner that the posture of the fixed mirror 5, that is, an angle of the fixed mirror 5 with respect to the beam splitter 4 is controlled by a fixed mirror posture adjusting mechanism 20. Figs. 2A and 2B are diagrams showing the structure of the fixed mirror posture adjusting mechanism, wherein Fig. 2A is a front external diagram thereof and Fig. 2B is a sectional schematic diagram thereof cut-away along an axial line C2 in Fig. 2A. Figs. 3A and 3B are diagrams showing the same portion of Fig. 2B and explaining the operation of the fixed mirror posture adjusting mechanism.

The fixed mirror 5 of a disc shape is fixed to a holder 21. The holder 21 is fixed to the one end of a supporting rod 22 having a neck portion 221 which is formed by elastic material such as rubber. The fixing position of the supporting rod 22 coincides with the center axis C3 of the fixed mirror 5. The supporting rod 22 is buried within a fixing table 23 along the axis line C3 and the other end of the supporting rod is fixed to the fixing table 23 by means of a screw 24. Thus, the fixed mirror 5 and the holder 21 freely swing around the neck portion 221 of the supporting rod 22 serving as a fulcrum.

A screwing hole 25 having a female screw portion formed at a portion of the inner periphery thereof is formed at a predetermined portion on a transverse.axis C2 in the vertical direction with respect to the fixing table 23 so as to penetrate the fixing table along an axis line C4 almost in parallel to the transverse line C3. A column member 26 having a male screw portion formed at the outer periphery thereof and being made of metal, rigid plastic or the like is screwed into the screwing hole 25 so as to be freely inserted therein and removed therefrom. A laminated type piezoelectric element 27 such as a piezoelement is firmly fixed to the tip end surface of the column member 26. The tip end of the piezoelectric element 27 is made in contact with the rear surface of the holder 21 (a surface in opposite to the attachment surface of the fixed mirror 5). A leaf spring 29 fixed at the fixing table 23 by means of a screw 30 presses the surface of the holder 21 on the axis line C4 passing almost the centers of the piezoelectric element 27 and the column member 26. That is, the holder 21 is sandwiched between the piezoelectric element 27 and the leaf spring 29. The other end surface of the column member 26 is fixed at the center of a gear 28 which is driven and rotated by a motor 31.

When the motor 31 is rotated in a predetermined direction, as shown in Fig. 3A, the gear 28 rotates in a direction shown by an arrow M2 and both the column member 26 and the piezoelectric element 27 rotate integrally with the gear. In this case, the column member 26 gradually moves into the screwing hole 25 (in a direction shown by an arrow M3) due to the meshing operation between the column member 26 and the screw portion of the screwing hole 25, whereby the tip end of the piezoelectric element 27 pushes the rear surface of the holder 21. The holder 21 inclines upward against the biasing force of the leaf spring 29 by an angle θ1 around the neck portion 221 of the supporting rod 22 serving as a fulcrum.

When the motor 31 is rotated in the reverse direction as shown in Fig. 3B, the gear 28 rotates in a direction shown by an arrow M4, whereby the column member 26 gradually moves out of the screwing hole 25 (in a direction shown by an arrowM5) and the tip end of the piezoelectric element 27 moves in a direction away from the holder 21. Thus, the holder 21 is pushed by the leaf spring 29 and so inclines by an angle θ2 downward around the neck portion 221 of the supporting rod 22 serving as the fulcrum. In this manner, the fixed mirror 5 swings in the axis line C2 direction extending vertically in accordance with the forward and backward movement of the column member 26 and the piezoelectric element 27, that is, in accordance with the rotation of the motor 31.

Although ,most portions are hidden and so not shown in Fig. 2A (that is, only a leaf spring 32, a screw 33 for fixing the leaf spring 32 to the fixing table 23, a piezoelectric element 34 and a motor 35 are shown), there is provided with a mechanism for swinging the fixing table 23 in the axis line C1 direction extending horizontally. Thus, the fixed mirror 5 swings in the horizontal axis line C1 direction in accordance with the forward and backward movement of the piezoelectric element 34, that is, the rotation of the motor 35. In other words, the fixed mirror 5 is freely swingable in the two axial directions orthogonal to each other in accordance with the motors 31 and 35 and so can be adjusted in its angle freely with respect to the beam splitter 4.

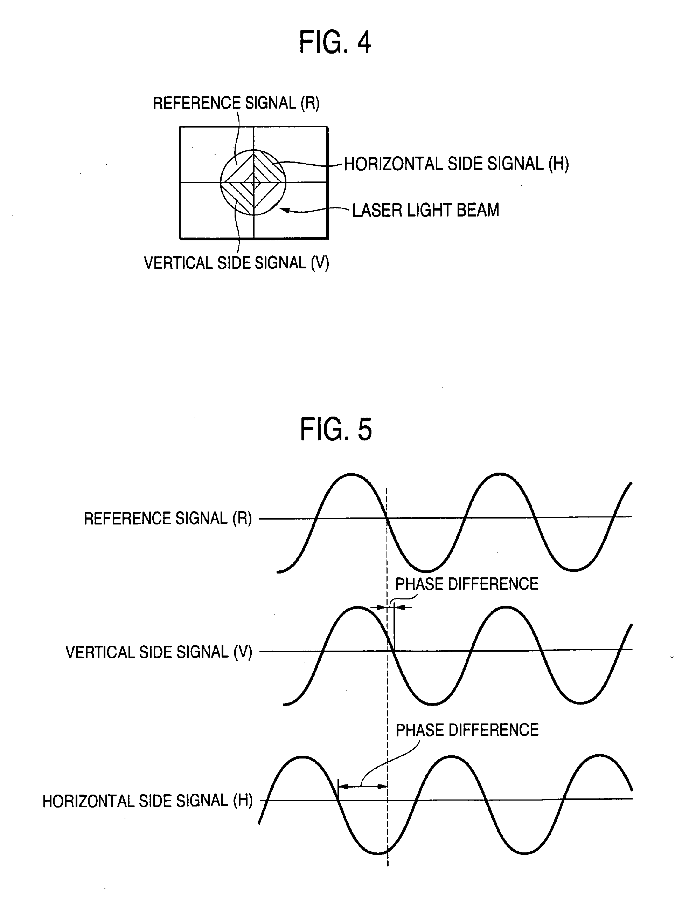

Normally, the rough adjustment of the fixed mirror 5 is required only at a particular temporal case such as after the replacement of the beam splitter 4. To this end, the interference spectrophotometer is provided with an instruction button for the rough adjustment at the operation unit 19. A measuring person operates the rough adjustment instruction button after the exchange of the beam splitter 4 etc., for example. In response to this operation, the CPU 16 makes the laser source 7 turn on a light. Then, the laser interference light beam (fringe) passed through the control interferometer is detected by the photo detector 14. As shown in Fig. 4, the photo detector 14 is divided into the four elements which output an average signal (a laser light), a reference signal (R) a horizontal side signal (H) and a vertical side signal (V), respectively. When the movable mirror 6 is moved, the laser fringe is outputted as signals such as sinusoidal waves shown in Fig. 5. The period of this signal depends on the moving speed of the movable mirror and the amplitude thereof becomes larger as the interference condition becomes better. The four signals outputted from the photo detector 14 are inputted into the interference condition extracting unit 15. The interference condition extracting unit 15 generates a signal corresponding to a deviation of the position where the interference light beam is projected, based on the four signals inputted therein. The signal thus generated is inputted into the amplifier 17 and the drive circuit 18 through the CPU 16 thereby to adjust the posture of the fixed mirror 5.

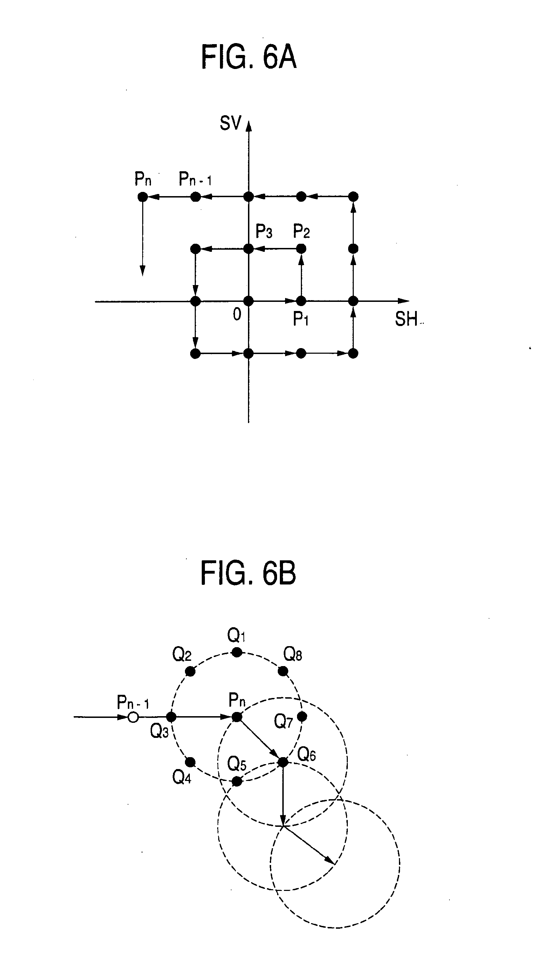

The procedure for the rough adjustment of the fixed mirror is shown in Figs. 6A and 6B. Fig. 6A is coordinates showing the posture of the fixed mirror, wherein an abscissa SH represents the horizontal direction and an ordinate SV represents the vertical direction. The amplitude of the laser fringe is measured sequentially while the posture of the fixed mirror 5 changes from a point 0 in the order of a point P1, a point P2, --- shown by arrows in Fig. 6A. The point 0 is an origin of the posture or a current position of the fixed mirror. The posture of the fixed mirror can be adjusted by driving the motors 31 and 35. The measurement is continued while the posture of the fixed mirror 5 changes in accordance with the arrows shown in Fig. 6A until the amplitude of the laser fringe becomes larger than a preset reference value. When the signal satisfying the reference value (a point Pn in Fig. 6A) is obtained, the amplitudes of the laser fringe are measured on a circle around this point as a center (see Fig. 6B). Since the amplitudes can not be measured for all the points on the circle, the amplitudes are measured in this case for eight points Q1 to Q8 on the circle. The point (the point Q6) having the largest amplitude among all the measured points on the circle is set as the center of the next circle and so the similar measurement is repeated. Such a procedure is repeated until the amplitude at the center of the circle becomes maximum among all the measured points on the circle. When the amplitude at the center of the circle becomes maximum among all the measured points on the circle, not an amplitude but a phase difference of the vertical side signal (V). from the reference signal (R) and a phase difference of the horizontal side signal (H) from the reference signal (R) shown in Fig. 4 are measured by the timer etc. of the CPU 16. Then, the motors 31 and 35 are driven so that the phase differences approach to a target phase difference and the rough adjustment is terminated when an error from the target value becomes within a predetermined range.

Each of the piezoelectric elements 27 and 34 causes a deviation of 5 µm at the maximum, for example, due to a voltage applied thereto from the outside. Although the deviation amount is quite small (less than 1/10 in this example) as compared with the aforesaid moving amount due to the forward and backward movement of the piezoelectric elements 27 and 34, more fine deviation can be obtained by the applied voltage. Further, in this case, the following property with respect to the deviation is preferable. Thus, in the interference spectrophotometer according to the embodiment, the fine adjustment of the posture is performed by applying the voltage to the piezoelectric elements 27 and 34, and further the posture adjustment requiring a large moving amount which can not be attained only by the voltage application to the piezoelectric elements is attained by controlling the rotation of the motors 31 and 35.

### [Modified example]

Although a condition where the laser interference becomes optimum does not generally coincide with a condition where the interference of the infrared light beam from an infrared source becomes optimum but these conditions do not differ extremely to each other. In the case where these conditions differ in a range capable of being adjustable by the fine adjustment, when the condition is adjusted through the rough adjustment so that the laser interference becomes optimum, the optimum.interference of the infrared light beam can be obtained through the fine adjustment. Thus, in the case of adjusting the laser interference of the interferometer so as to be optimum, such an adjustment can be performed only by adjusting the amplitude without using the phase differences of the vertical side signal (V) and the horizontal side signal (H) from the reference signal (R) of the laser fringe-The laser interference becomes optimum when the phase differences of the vertical side signal (V) and the horizontal side signal (H) from the reference signal (R) are zero and the average value of the amplitude becomes maximum.

In the adjustment, after such a point is found that the amplitude at the center of the circle becomes maximum, the diameter of the circle is made smaller and then the measurement of the amplitude is repeated in the similar manner. The diameter of the circle is made smaller gradually. When the diameter becomes smaller than a predetermined reference value, the point having the largest amplitude among all the measured points on the circle and at the center of the circle is stored as the position of the fixed mirror and the adjustment is completed. In this case, when the fine adjustment is not made, the laser detector may not be configured by the four pieces being divided but may be configured by only one element.

Since the interferometer is quite liable to be affected by shock or vibration, even if the adjustment is performed accurately, there sometimes arise a case that the interference condition is degraded during the transportation of the interferometer. In this case, it is required to adjust the interferometer again. However, according to the invention, since the adjustable range of the interferometer is quite large and the interferometer can be adjusted easily, the interferometer can be re-adjusted easily. Further, in the interference spectroscopic measurement, there is a case where the measuring wavelength range is changed by exchanging the beam splitter. The exchange of the beam splitter in such a case can be performed quite easily. In general, when the beam splitter of the interferometer is exchanged, the state of the interferometer changes largely, so that time, labor and experience is required in order to re-adjust the interferometer. According to the invention, such an adjustment becomes easy and further the adjustment can be performed automatically by the computer processing.

## Claims

1. A method of adjusting a fixed mirror of a double-beam interferometer including a control interferometer, comprising:
detecting a laser interference light beam from the control interferometer; and
adjusting an angle of the fixed mirror with respect to a laser light beam axis in a range from a state where laser light beams do not interfere at all to a state where an intensity of interference of the laser light beams becomes maximum or the laser light beams become in an arbitrary interference state.

2. The method of adjusting a fixed mirror according to claim 1, wherein said adjusting step includes:
measuring amplitudes of the laser interference light beam while moving a posture of the fixed mirror until the amplitude becomes larger than a preset reference value;
measuring amplitudes of the laser interference light beam while moving the posture of the fixed mirror to points on a circle around a point where the amplitude becomes lager than the reference value as a center;
setting a point having the largest amplitude among all the measured points on the circle as the center of the next circle ; and
repeating the measuring step of the amplitudes at the points on the circle and the setting step until the amplitude at the center of the circle becomes maximum among all the measured points on the circle.

3. The method of adjusting a fixed mirror according to claim 2, wherein said adjusting step further includes:
moving the posture of the fixed mirror so that phase differences of a vertical side signal and a horizontal side signal from a reference signal of the laser interference light beam approach preset target phase differences.

4. An interferometric spectrophotometer comprising:
a control interferometer having a fixed mirror ;
a photo detector (14) for detecting a laser interference light beam from the control interferometer; and
an adjusting mechanism (20) for adjusting an angle of the fixed mirror with respect to a laser light beam axis in a range from a state where laser light beams do not interfere at all to a state where an intensity of interference of the laser light beams becomes maximum or the laser light beams become in an arbitrary interference state.
